# EUROPEAN PATENT APPLICATION

(11) **EP 4 697 625 A1**
(43) Date of publication of application: **18.02.2026**
(21) Application number: 25189114.9
(22) Date of filing: 11.07.2025
(51) Int. Cl.: H04B 10/70

(54) **METHOD, CONTROL PROGRAM, COMPUTER-READABLE DATA CARRIER, CONTROL UNIT, QUANTUM DEVICE, QUANTUM NETWORK, APPARATUS, AND QUANTUM COMPUTING ARRANGEMENT FOR ESTABLISHING A QUANTUM COMMUNICATION CHANNEL**

(30) Priority: 13.08.2024 DE 102024123019
(71) Applicant: Airbus S.A.S., 31700 Blagnac (FR)
(72) Inventor: Milheiro Mendes, Paulo-Jorge, Taufkirchen (DE)
(74) Representative: OTN Airbus SAS

(57) **Abstract**

A method, control program (11), computer-readable data carrier (13), control unit (3) quantum device (2), quantum network (Q) , apparatus (7), such as a satellite (9b), an aircraft (9a) and/or a communication station (8), and/or quantum computing arrangement (1) for establishing a quantum communication channel (C) to transmit quantum data units (Z) between a source (A) quantum device (2) and a destination (B) quantum device (2) are provided, the method comprising the steps of requesting at least one quantum path (J) between a first quantum device (2) and a second quantum device (2); establishing at least two quantum bounded channels (K) between respective two quantum devices (2) each designated for enabling the at least one quantum path (J); providing at least two quantum links (L) by entangling at least one qubit (q) of each of the respective two quantum devices (2) connected by the at least two quantum bounded channels (K); and synchronizing the quantum devices (2) providing the at least two quantum bounded channels (K) in time to provide the at least one quantum path (J) via the at least two quantum links (L) simultaneously for establishing the quantum communication channel (C).

## Description

### Technical Field

The present description relates to the field of quantum computing. In particular, the disclosure relates to a method for establishing a quantum communication channel to transmit quantum data units between a source quantum device and a destination quantum device in a quantum computing arrangement, to a control program for controlling a quantum computing arrangement, to a computer-readable data carrier, to a control unit for controlling at least one quantum device in a quantum computing arrangement, to a quantum device for a quantum computing arrangement, to a quantum network for a quantum computing arrangement, to an apparatus, such as a satellite, an aircraft and/or a communication station, and to a quantum computing arrangement.

### Technical Background

The Quantum Internet aims to allow the transmission of quantum bits (qubits) between any pair of quantum devices, allowing the exchange of quantum information to support several applications, including distributed quantum computation, secure communication, and precision sensing (see R. Van Meter, Quantum networking. John Wiley & Sons, 2014). Like the classical internet, a Quantum Internet consists of network components like communication links and routers (cf. N. Sangouard, R. Dubessy, and C. Simon, "Quantum repeaters based on single trapped ions," Physical Review A, vol. 79, no. 4, p. 042340, 2009). However, due to fundamental differences between classical bits and qubits, quantum network components behave rather differently than classical network devices.

For example, qubits cannot be copied, which rules out retransmission as a means to overcome qubit losses. In order to allow the exchange of qubits, there is the need to first produce quantum entanglement between a qubit held by the sender and a qubit held by the receiver. Once this entanglement has been produced, the qubit can then be sent using quantum teleportation (cf. C. H. Bennett, G. Brassard, C. Crepeau, R. Jozsa, A. Peres, and W. K. Wootters, "Teleporting an unknown quantum state via dual classical and einstein-podolsky-rosen channels," Physical review letters, vol. 70, no. 13, p. 1895, 1993), which consumes the entanglement, meaning that it has to be reestablished before the next qubit can be sent. All this process is possible by using a routing entanglement protocol (see M. Caleffi, "Optimal routing for quantum networks," IEEE Access, vol. 5, pp. 22 299 - 22 312, 2017).

Many routing and forwarding protocols in classical data networks (such as the Internet) may not be directly applicable to quantum networks. For example, the network layer of the Internet primarily uses the connectionless datagram method. The quantum no-cloning theorem makes quantum information impossible to be copied and retransmitted, and so the datagram method cannot be applied.

The virtual circuit model may be more suitable for quantum networks. In this case, and in order to provide the conditions of entanglement swapping, the connection (virtual circuit) is established before communication, and the path nodes are determined to ensure the entangled resources needed for communication. Entanglement swapping allows quantum repeaters to generate long distance entanglement by connecting short-distance entanglement pairs.

In a classical network, routing protocols are commonly based on link-state and distance-vector algorithms. However, in a quantum network, link states are probabilistic and vary in different time slots. Moreover, there is no time for global link-state broadcast or distance vector convergence because entanglements established on the different quantum links will quickly decay. Moreover, a quantum link cannot be shared by multiple source-destination pairs, which is allowed in classic networks. Hence, shortest paths as computed in classic routing will not always be available.

Efficiently designing routing entanglement protocols is a challenging problem, namely because the number of entangled qubit pairs available on a link or path at any one time is finite. This means that when the amount of qubits to be transmitted on a single quantum path is greater than the capacity of that path, meaning the available number of entangled pairs, the exceeding number of qubits must wait for the path nodes to regenerate the entangled pairs before being transmitted. This problem leads to an increase in waiting time for data qubits in memory, resulting in decoherence and reduced fidelity, meaning that quantum networks should have a timeliness property, aiming to reduce the time qubits need to spend in memory in order to reduce decoherence.

Entanglement routing aims to allow the realisation of long-distance end-to-end communication of data qubits. However, it comes with several challenges, such as no-cloning, and decoherence. The no-cloning theorem states that quantum data cannot be copied, and decoherence is the gradual loss of coherence due to the interaction between the system and the environment, which leads to the loss of quantum data. This limits the time that entangled qubits can be stored in a quantum repeater memory.

Quantum routing protocols known from the prior art aim to decide about the optimal path before generating end-to-end entanglement. Quantum routing is more complex than routing in classical networks, since it not only requires considering classical metrics, such as path length, cost, and throughput to calculate the best path(s), but it also needs to consider the required end-to-end quantum fidelity. In this context, there are several quantum routing proposals according to the prior art that aim to find alternative entangled paths for each connection, an operation that may include an operation to improve communication efficiency by purifying quantum links in order to achieve the required fidelity thresholds.

Although quantum routing algorithms are an emerging area of research, there are already several proposals, most of which aim to identify single paths, as described by Marcello Caleffi, 2017, in "Optimal routing for quantum networks", IEEE Access 5(2017),22299-22312; Kaushik Chakraborty, David Elkouss, Bruno Rijsman, and Stephanie Wehner, 2020, in "Entanglement Distribution in a Quantum Network, a Multi-Commodity Flow-Based Approach", (2020) or Zhang, L., Liu, Q., in "Optimisation of the routing protocol for quantum wireless Ad Hoc network", IET Quant. Comm. 1-8 (2021). https://doi.org/10.1049/qtc2.12028, while others aim to support end-to-end multiple paths, which may however be overlapping, as described by Li C., Li T., Liu Y. X., et al. in "Effective routing design for remote entanglement generation on quantum networks [J], npj Quantum Information, 2021, 7(1).

The choice between centralised and distributed quantum routing depends on the specific requirements and constraints of the quantum network. Centralised quantum routing, as also mentioned by Skrzypczyk, Matthew and Stephanie Wehner, in "An Architecture for Meeting Quality-of-Service Requirements in Multi-User Quantum Networks", ArXiv abs/2111.13124 (2021), involves a central entity calculating the optimal paths for quantum information transmission. This approach can be efficient in terms of resource utilisation, as the central entity has a global view of the network state. However, it may face scalability issues in large networks due to the need for global information and the potential for a single point of failure. On the other hand, distributed quantum routing involves each node making routing decisions based on local information. This approach can be more scalable and robust against failures, as there is no single point of failure. Nevertheless, it may have limitations in terms of the efficient use of resources, as nodes lack a global view of the network.

Most of the approaches proposed according to the prior art follow a centralised model focused on the operation of a centralised control system like Software-Defined Networking (SDN), which possesses all fundamental information about the network, such as network topology, resources for each edge network, and the success probabilities of entanglement over different links. This is the case of the work proposed by Caleffi (see above), related with a routing algorithm that tries to find an optimal path between a source and a destination based on a route metric called end-to-end entanglement rate. Both of the path selection algorithms are centralised algorithms and work under the assumption that each node has information about the entire network.

In centralised approaches, the central controller collects information regarding the source destination pairs and identifies the optimal set of edges to create external links. These links can also serve as backup options in case of failures. After this, the central controller needs to instruct relevant nodes to establish the computed external links. However, despite of the allocated resources, it is plausible that not all links can be successfully created. Therefore, the external controller needs to receive reports from the nodes on the successfully established external links, based on which it determines the most efficient way to form entanglement paths. Once external and entanglement paths are established, sources are informed by the central controller that they can transmit qubits over the entanglement connections before the current time slot ends. However, due to the time-consuming central operations, namely the collection of global information and the need for the central controller to act on all quantum devices, it may happen that the total operation lasts longer than the coherence time of deployed qubits.

### Summary

It may thus be seen as an object to provide a reproducible, reliability and efficient way for enabling communication in quantum computing arrangements, In particular, it may be seen as an object to provide an entanglement routing mechanism able to generate and exploit multiple paths in order to maximise the number of simultaneous quantum-user pairs and their expected throughput. This object is solved by the subject matter of the independent claims.

According to an aspect, a method for establishing a quantum communication channel to transmit quantum data units between a source quantum device and a destination quantum device in a quantum computing arrangement is provided, the method comprising the steps of requesting at least one quantum path between the first quantum device and the second quantum device; establishing at least two quantum bounded channels between respective two quantum devices each designated for enabling the at least one quantum path; providing at least two quantum links by entangling at least one qubit of each of the respective two quantum devices connected by the at least two quantum bounded channels; and synchronizing the quantum devices providing the at least two quantum bounded channels in time to provide the at least one quantum path via the at least two quantum links simultaneously for establishing the quantum communication channel.

According to an aspect, a control program for controlling a quantum computing arrangement is provided, comprising instructions which, when the control program is executed by a control unit, cause the control unit to carry out a corresponding method.

According to an aspect, a computer-readable data carrier is provided, having stored thereon a corresponding control program.

According to an aspect, a control unit for controlling at least one quantum device in a quantum computing arrangement is provided, configured to carry out a corresponding method of and/or comprising a corresponding computer-readable data carrier.

According to an aspect, a quantum device for a quantum computing arrangement is provided, configured to carry out a corresponding method and/or adapted to be controlled by a corresponding control unit.

According to an aspect, a quantum network for a quantum computing arrangement is provided, configured to carry out a corresponding method and/or comprising at least one corresponding control unit and/or at least one corresponding quantum device.

According to an aspect, an apparatus, such as a satellite, an aircraft and/or a communication station, is provided, configured to participate in a quantum computing arrangement, comprising at least one corresponding control unit, at least one corresponding quantum device, and/or at least one corresponding quantum network.

According to an aspect, a quantum computing arrangement is provided, configured to carry out a corresponding method according to at least one of claims, comprising at least one corresponding control unit, at least one corresponding quantum device, at least one corresponding quantum network, and/or at least one corresponding apparatus.

The source quantum device can be a first quantum device configured as a sender and the destination quantum device can be a second quantum device configured as a receiver to be connected to each other via the quantum communication channel for transmitting information in the form of quantum data units. The quantum path can provide at least a portion, part and/or segment of the quantum communication channel.

Quantum channels (e.g., photons) can be used to transfer quantum information between stationary qubits in adjacent quantum devices. Devices can assign qubits to quantum channels, such that no qubit is assigned to more than one channel. Channels are said to be bounded when adjacent devices assign qubits to both ends of it. There could be more than one bound channel between two devices. Adjacency is created via a direct optical link (e.g., fibre, free space optics) between two quantum repeaters, or via a shared optical medium (e.g. a satellite). Channels are characterised by a Quantum Channel State, which may for instance reflect the quality of the channel.

A control unit or network controller can aim to send updates to all quantum devices when necessary about: i) current source-destination communication pairs that need to establish long-distance entanglements; ii) number of end-to-end entanglements needed for each source-destination pair (throughput); iii) priority of the source-destination pair. The controller can assign the priority of each source-destination pair based on the needed throughput and some operational metrics (e.g. high priority to source-destination pairs with high throughput, or equal cost to each end-to-end entanglement). At the end all source-destination pairs should have different priorities. The communication between the network controller, which can be installed in a satellite, and quantum devices is done via classical communication links.

Quantum devices can be connected to each other via quantum channels, and to the Internet via classical channels. Each quantum device has a certain number of stationary qubits in arranged in a quantum memory. A quantum device may be configured as and/or comprise at least one quantum processor and/or at least one quantum repeater. Quantum processors can be quantum devices that have a behaviour similar to end hosts in the classical Internet. Quantum repeaters can be quantum devices that allow the establishment of quantum entanglement between any pair of remote quantum processors. Quantum repeaters can support long distance entanglement via quantum swapping. Quantum repeaters may exchange control information via the Internet.

The quantum computing arrangement can be configured as and/or comprise a quantum network of quantum devices. An apparatus can comprise and/or take part in a quantum computing arrangement. A quantum network may be established within and/or outside the apparatus.

The present solution allows to ensure a timeliness property for quantum communication channels by simultaneous multiple paths to address the entanglement routing problem. The resulting entanglement routing mechanism is able to generate and exploit multiple paths in order to maximise the number of simultaneous quantum-user pairs and their expected throughput. The proposed routing is able to work with any entanglement generation procedure, reacting to on-demand requests for end-to-end quantum paths between any pair of quantum devices at different time slots. At each time slot, the algorithm finds contention-free paths for current source-destination quantum pairs. A set of paths is 'contention-free' when the routing mechanism is able to satisfy the on-demand request while avoiding assigning the same quantum resources to different paths.

The proposed mechanism follows a decentralised operation based on classical techniques, as these are arguably more likely to be implemented in the near future quantum technology. These techniques aim to first discover a path from a source to a destination and then distribute the entangled links along the path. The difference between these approaches comes from the path selection algorithms.

In contrast to that, for instance R. Van Meter, T. Satoh, T. D. Ladd, W. J. Munro, and K. Nemoto, in "Path selection for quantum repeater networks," Networking Science, vol. 3, no. 1-4, pp. 82-95, 2013, defined a cost metric across each communication link and then used Dijkstra's algorithm to find an optimal path between a source and a destination. However, Dijkstra's algorithm can only find the shortest path when the routing metric is additive, which may not happen in a quantum network. Following a different approach, M. Pant, H. Krovi, D. Towsley, L. Tassiulas, L. Jiang, P. Basu, D. Englund, and S. Guha, in "Routing entanglement in the quantum internet," npj Quantum Information, vol. 5, no. 1, p.25,2019, proposed a greedy multi-path routing algorithm for distributing entanglements. However, multi-path routing algorithms may not be scalable for a larger network with multiple demands. An approach based on a major path and selected alternative ones may scale better, while still bringing the advantage of exploiting multiple paths.

Therefore, a routing mechanism according to the present solution enables to find alternative path segments between any pair of quantum devices while being aware of available quantum resources. Thereby, the number of quantum devices with good throughput (number of end-to-end entanglements) can be increased, while considering the decoherence rate of qubits. The proposed mechanism allows a quantum network to generate entanglements on-demand, reacting only when a request arrives. The reactive nature of the proposed mechanism aims to avoid computing potential candidate path segments that may later on collision for quantum resources, which may occur when all the potential paths are computed before knowing their resource need.

The proposed mechanism can be decentralised in order to make it less dependent on the network topology considering that the performances of centralised shortest path routing algorithms as proposed in E. W. Dijkstra, in "A note on two problems in connexion with graphs," Numerische Mathematik, vol. 1, no. 1, pp. 269-271, 1959, are highly dependent on the network topology, making them less reactive to topology changes, which may happen more frequently when long quantum satellite links are used.

In view of the above, in comparison with other approaches that aim to support entanglement routing, the proposed solution has numerous advantages. For example, the solution avoids generation of a single point of failure. In makes aware of available quantum resources, such as deployed qubits. It enables to take advantage of edges with multiple qubits in order to support purification. It is able to avoid resource collision between different simultaneous paths. It has a low dependency on the network topology. It is better scalable than other multiple path approaches as known from the prior art.

Further developments can be derived from the dependent claims and from the following description. Many of the features described with reference to a method may be implemented as device features, or vice versa. Therefore, the description provided in the context of a method for establishing a quantum communication channel applies in an analogous manner also to a control unit, a quantum device, a quantum network, an apparatus, and/or a quantum computing arrangement, respectively. In particular, the steps of a methods and mentioned components involved therein may be implemented as functions of a control unit, a quantum device, a quantum network, an apparatus, and/or a quantum computing arrangement, and their functions may be implemented as method steps.

According to an embodiment of a method, the method further comprises the step of providing a setup message to be received by the quantum devices designated for enabling the quantum path. The setup message can be sent by the control unit to the respective quantum devices. Quantum devices designated for establishing the quantum communication channel can be configured as quantum routers. The setup message can be followed by an announcement message providing information about the state of local and bounded and bounded channels, e.g., with an indication of bounded source-destination pairs. Thereby, the setup message allows for efficiently and reliably setting up involved quantum devices when establishing the quantum communication channel.

According to an embodiment of a method, the method further comprises the step of establishing at first set of quantum links for providing at least two alternative quantum communication channels. A pairing list of source-destination pairs of quantum devices and respective quantum channels can be administered. The quantum channels can be prioritised in the list by means of respective prioritisation values or parameters. The pairing list can comprise information about bounded an unbounded channels, which can be kept as different sections of the pairing list and/or as subsets of the pairing list. The quantum devices can update the pairing list according to unserved source-destination pairs for removing the end-to-end entanglement along respective quantum paths. Thereby, the pairing list allows for efficiently and reliably setting up involved quantum devices when establishing the quantum communication channel.

According to an embodiment of a method, the method further comprises the step of assessing at least one at least one quantum path to be best suited for establishing the quantum communication channel. The quantum communication channel can be established by means of at least one quantum path which has been computed to be best suited for establishing the quantum communication channel. The assessment can further involve a computation of distances between quantum paths to an at least theoretical main path for providing the quantum communication channel. This further helps in providing reliable communication via the respective quantum communication channel.

According to an embodiment of a method, the method further comprises the step of triggering a timer for synchronizing the quantum devices. A respective time interval established by means of the timer can determine an actual quantum data unit transfer rate. Consequently, the timer allows for reliably establishing the quantum communication channel at a desired and/or required quantum data unit transfer rate.

According to an embodiment of a method, the method further comprises the steps of sending a data request message with the source quantum device to the quantum devices providing the at least two quantum bounded channels for providing information regarding resources of the quantum devices required for establishing the quantum communication channel. The data request message allows to assess availability of resources of the quantum devices providing the at least two quantum bounded channels. Thereby, the data request message allows for efficiently and reliably setting up involved quantum devices when establishing the quantum communication channel.

According to an embodiment of a method, the method further comprises the step of providing at least one link state message indicating a quality of the at least two quantum links represented by a time-to-live value representing an average level of fidelity of the at least two quantum links. The at least one link state message can trigger calculation and/or provision of the time-to-live value. The time-to-live value can be seen as a core parameter for assessing quality of the at least two quantum links. Thereby, the at least one link state message and time-to-live value further help in efficiently and reliably establishing the quantum communication channel.

According to an embodiment of a method, the method further comprises the step of swapping an entanglement of qubits within at least one quantum device establishing at least two quantum links. The swapping can be performed by placing an internal link between qubits of two local quantum links. Quantum devices which serve as repeaters that are also splitters can perform swapping over a recovery path when link state messages are received from neighbours on the best path. This further helps in efficiently and reliably establishing the quantum communication channel.

### Brief Description of the Drawings

The subject matter will hereinafter be described in conjunction with the following drawing figures, wherein like numerals denote like elements, and wherein:
Fig. 1 is a schematic representation of a computing arrangement.
Fig. 2 is a schematic representation of a quantum computing arrangement in preparation for establishing at least one quantum communication channel.
Fig. 3 is a schematic representation of a quantum computing arrangement with at least one established quantum communication channel.
Fig. 4 is schematic representation of the steps of a method for establishing a quantum communication channel.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

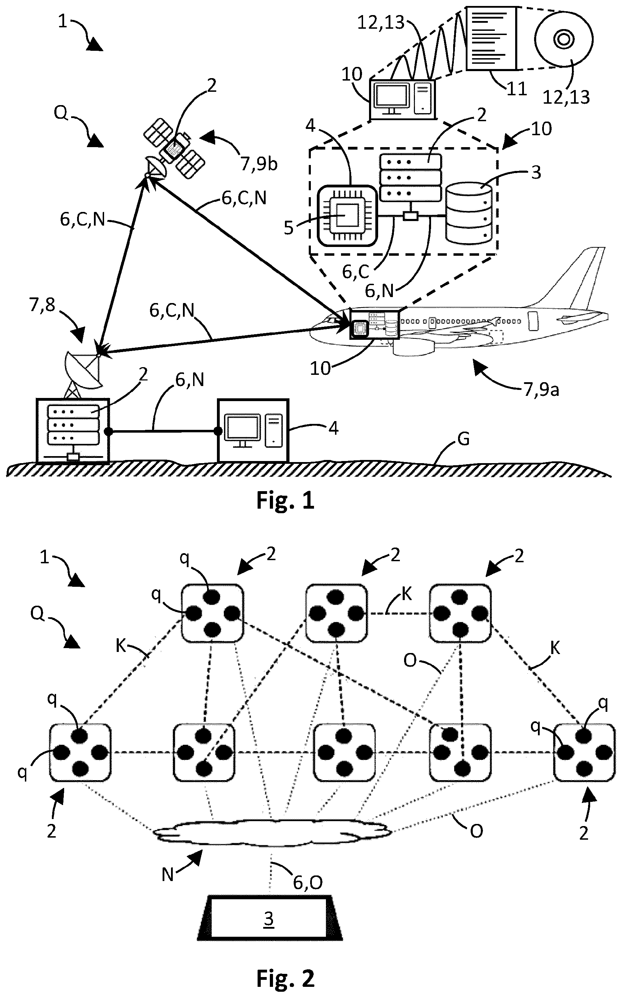

Fig. 1 shows a schematic representation of a computing arrangement 1 comprising a number of quantum devices 2 and respective control units 3 which may be provided with interface modules 4 to connect the quantum devices 2 and/or control units 3 to control elements 5 which can be connected to each other via the respective transmission lines 6 which may be configured transport any kind of information, data, power and/or energy, including photonic links. Therefore, the transmission lines 6 which may involve any suitable wired, wireless, and or optical communication means, including lines, cables, transceivers, antennas, satellite dishes, and alike. In present example, the quantum devices 2 and respective control unit 3 may be provided to apparatuses 7, such as ground stations 8 on a ground G and/or vehicles 9, including aircraft 9a and/or satellites 9b. Therefore, the apparatuses 7 may comprise respective computer systems 10 which may include quantum devices 2, control units 3, interface modules 4, control elements 5 and/or transmission lines 6 as desired or required for their respective application, e.g. for enabling quantum computation, secure communication, and/or precision sensing of certain parameters and/or values, such as for quantum sensing acceleration, gravity, magnetic effects, photonic effects, radiation, rotation, or alike, by means of the control elements 5 to be then computed by means of the quantum devices 2 configured for establishing a quantum network Q via respective quantum communication channels C and/or a classical or conventional network N by means of the respective transmission lines 6.

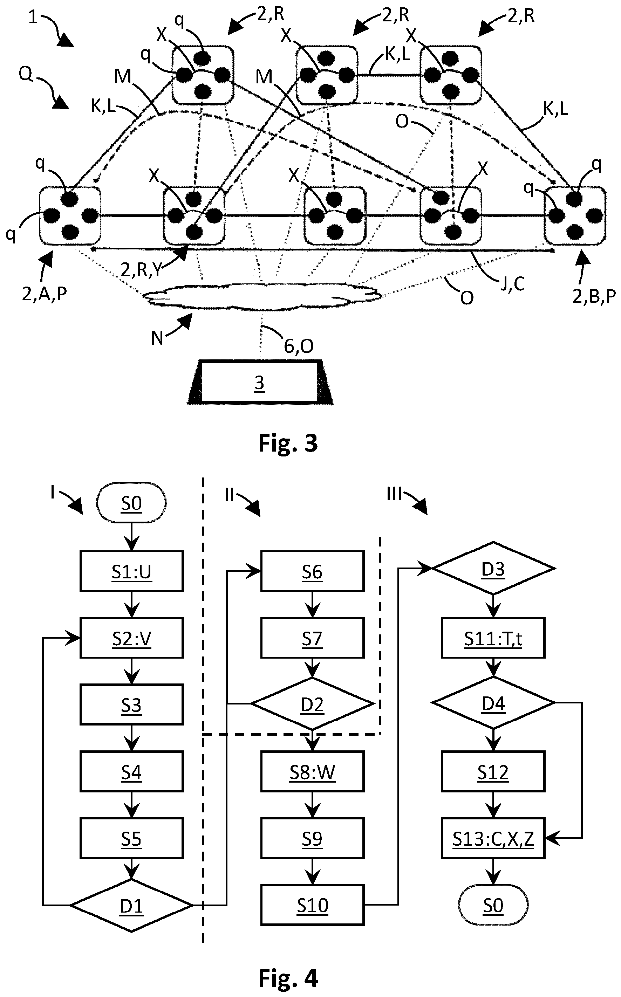

A computer program 11 for controlling the computing devices 10 can be stored on a computer-readable data carrier 12 which may take the form of a computer-readable medium 13 and/or data carrier signal 14. The computer system 10 may comprise the quantum device 2, control unit 3, interface module 4, control element 5 and/or transmission lines 7, the computer program 11, the computer-readable data carrier 12, which may be adapted for exchanging data between the respective above-mentioned components. Control elements 9 may be any kind of data source, such as a measuring element, classical sensor, quantum sensor output device and/or actuator of any of the apparatuses 7. The involved quantum devices 2 may therefore serve as source A quantum devices 2 in the sense of a sender, destination B quantum devices 2 the sense of a receiver, as quantum processors P behaving similar to end hosts in classical network environments, and/or as quantum repeaters R that allow for the establishment of a quantum entanglement between any pair of remote quantum processors P (see Figs. 2 and 3)

Fig. 2 shows a schematic representation of a quantum computing arrangement 1 in preparation for establishing at least one quantum communication channel C in a quantum network Q. The quantum computing arrangement 1 comprises a number of quantum devices 2 each comprising a number of qubits q which can be linked to each other via quantum bonded channels K illustrated as dashed lines. In addition, the quantum devices 2 can be linked to each other via network channels O of the conventional network N illustrated as dotted lines which, for example, may be provided in the form of an Internet infrastructure, utilising respective transmission lines 6. The quantum network Q and conventional network N can be controlled by means of at least respective control unit 3.

Fig. 3 shows a schematic representation of a quantum computing arrangement within at least one established quantum communication channel C in the quantum network Q. Based on the quantum bounded channels K, quantum links K illustrated as solid lines are established by entangling at least one qubit q of each of the respective 2 quantum devices 2 designated for enabling at least one quantum path J illustrated as a straight solid line which may comprise multiple path segments M illustrated as dashed lines. By synchronising the quantum devices 2 providing the quantum bounded channels K via the quantum links L simultaneously, a respective quantum communication channel C can be provided based on the quantum path J.

The quantum devices 2 providing the source A and the destination B of information transferred along the quantum path J and/or quantum communication channel C can be configured as quantum processors P. Any of the quantum devices 2 arranged in along the quantum communication channel C between the source A and destination B can serve as quantum repeaters R. For allowing the information to pass the quantum repeaters R respective pairs of qubits q in the quantum repeaters R are undergoing a swapping X.

Over such a topology of a quantum communication arrangement 1, the requested end-to-end quantum paths J can be created by establishing first a set of quantum links L by entangling qubits of q established quantum bounded channels K, and by having quantum devices 2 perform the entanglement swapping X to effectively extend the established entanglements towards two remote quantum devices 2, as shown in Fig. 3, which illustrates a main end-to-end path J with two alternative segments M. Using the resulting end-to-end entanglement, one quantum device 2 can teleport the state of a data qubit q to another quantum device 2 without physically transmitting the data qubit q itself, destroying the entanglement in the process. An ebit involved in such a proves may corresponds to the amount of entanglement that is contained in a maximally entangled two-qubit state (Bell state).

For entanglements to be held simultaneously in adjacent quantum links L, quantum repeaters R need to be synchronised in time. This can be achieved by using synchronisation protocols, for example, Internet synchronisation protocols via network channels O which can be provided and/or controlled by the control unit 3. This synchronisation process allows quantum repeaters R to work based on time slots, a duration of which ensures that established entanglements do not discohere within a specific time slot. At each time slot, the routing algorithm is able to discover end-to-end paths for current source-destination pairs, while resources are still available in the network, and avoid collisions in the access to available resources.

Fig. 4 shows a schematic representation of the steps S of a method for establishing a quantum communication channel C. Certain Steps S may involve respective decisions D. An exemplary operation of the proposed routing protocol can involve three phases, namely a first phase I, a second phase II and/or a third phase III.

The first phase I can involve a process of building a best suited topology for the quantum network Q. In a first step 1 of the first phase I, all involved quantum devices 2 can receive setup messages from the control unit 3 setup messages U with information about current source-destination pairs that need long-distance entanglements, throughput (number of end-to-end entanglements) for each source-destination pair, and/or quality of each end-to-end entanglement. Based on that information, quantum repeaters R can compute the best quantum paths J for each source-destination pair based on suitable quantum metrics (e.g. path weight, given by the minimum number of parallel quantum bounded channels K available between any pair of adjacent quantum repeaters R in that quantum path J in a proportional order to the quality of the end-to-end entanglement), while avoiding resource collisions. Since all quantum repeaters R can run the same decision-making process, all of them may have the same view about the overall calculation of best quantum paths J.

The present example, the first phase I may comprise the following steps S encompassing respective operations which can be performed by each of the involved quantum repeaters R: For departing from an idle mode S0 of the quantum network Q, in the first step S1, each quantum repeater R can perform data exchanges with neighbouring quantum repeaters R over classical network channels O, In a second step, announcement messages V with information about the state of local unbounded and bounded channels (with indication of bounded source-destination pair) can be propagated to all quantum repeaters R in the quantum network Q. in a third step S3, each involved quantum repeater R can calculate the best quantum paths J for each source-destination pair of quantum devices 2 based on the collected topology, quantum channel state information, and metrics such as minimum hop count and maximal overall channel quality.

The fourth step S4, each of the involved quantum repeaters R can bind qubits q to local channels selected for the estimated best quantum paths J, starting from the source-destination pairs with higher priority. The quantum bounded channels K can be marked with an ID of the source-destination pair of quantum devices 2, and can then be removed from the list of unbounded local channels. In the fifth step S5, all repeaters can update the list of unserved source-destination pairs, removing the end-to-end entanglement that were reserved in steps S2 and S3. Each of involved quantum repeaters R can repeater repeats steps 1, 2 and 3 while there are still unserved source-destination pairs which can be decided in the respective first decision D1.

The second phase II can involve steps S and decisions D for building a desired and/or required segment topology: After computing the best quantum paths J for all source-destination pairs of quantum devices 2, the remaining qubits q and channels can be used to build alternative path segments M to be used as recovery segment paths for each source-destination pair of quantum devices 2. Each recovery path can start, and end ends in a different quantum repeater R of the best quantum path J, and may be called quantum network splitters Y (see Fig. 3). Quantum repeaters R configured as quantum network splitters Y must not be more than a number of k network hops away from each other on a principal path, since the k is also the number of hops used to broadcast results of entanglement to ensure consistent swapping decisions in the third phase III. The second phase II can encompass the following operations to be performed by each quantum repeater R:

In the second phase II, during a sixth step S6, while still having unbounded channels, each quantum repeater R can estimate its distance (number of hops) towards two quantum network splitters Y located in the best quantum path J of source-destination pairs, starting with the pairs with highest priority. In a seventh step S7, quantum repeaters R that are at a distance smaller than the time-to-live (number of hops) of respective link state messages W (used in phase 3), including the quantum network splitters Y, can bind qubits q to channels towards the quantum network splitters Y, for example, marking the respective channels as bounded with the ID of the source-destination pair and a mark of segment channel. The creation of quantum segments M is thus known to the quantum network splitters Y since all involved quantum repeaters R can run the same recovery algorithm. The quantum repeaters R may then repeat steps S1 and S2.

The third phase III may involve sending data Z to be transmitted. In the third phase III, the quantum repeaters R can try to create quantum links L over bounded quantum channels K, and swap X quantum links L assigned to the same end-to-end quantum path J. However, involved quantum repeaters R may only have a certain amount of time available to attempt to create quantum links L over the quantum bounded channels K, being this time can be correlated with the size of an available memory, since if the memory storage time is not large enough, then reserved links might decohere. Hence, the third phase III can start with an eighth step S8, when a quantum device 2 collocated with a quantum source A sends a data request and/or link state message W over network channels O to the quantum repeaters R involved in the best quantum path J towards the destination B. The quantum device creates as many Data Request Messages W, as required according to a respective number of end-to-end entanglements associated with the source-destination pair of quantum devices 2.

Each data request message W can include a vector of time variables indicating the waiting time to trigger the entanglement process in each quantum repeater R in the source-destination pair of quantum devices 2 of the respective quantum path J. The waiting time for each quantum repeater R can be computed based on the state of the quantum memories (e.g., included in the announcement messages V), and the expected delay towards those quantum repeaters R (e.g., estimated based on the reception of announcement messages V). The waiting times for all quantum repeaters R in respective the quantum path J must be equal in order to ensure that the entanglement process of all quantum channels C is triggered at the same point of time. Furthermore, each data request message W may include a variable indicating the number of needed entanglement processes (e.g., associated with the number of data units to send), and/or a variable indicating the time interval between each entanglement process (e.g., to indicate the transmission frequency).

In the third phase III, the following steps S and decisions D may be performed which may involve respective operations performed by each of the involved quantum repeaters R: In an eighth step S8, each involved quantum repeater R can receive the data request message W. In a ninth step S9 the creation of the local quantum link can be performed after the assigned waiting time, and forwards the data request message W in the selected best quantum path J, as well as optionally in a tenth step S10 over a recovery path, if the quantum repeater R is configured as a quantum network splitter Y. In an eleventh step S11, after the expiration of the waiting time, link creation can be done by a request, for example, in the form of a link state message T sent to an entanglement source or by interfacing with a local entanglement operation. The information about the fidelity of the quantum links L can be locally stored as respective link state parameter (e.g., compared to link-state routing of classical networks, quantum link states are highly dynamic and nondeterministic).

After the creation of the quantum links in the eleventh step S11, in a twelfth step S12, each of the involved quantum repeaters R can send a respective link state message T over the network channels O to its neighbours if the link state is lower than the configured threshold (e.g., set up by the control unit 3). The link state message T can be sent with a time-to-live of t indicating. Since entanglements decay quickly, the value of t can be directly proportional to the average level of fidelity of the network quantum links L (e.g., the value of t can be estimated and distributed by the control unit 3). In a thirteenth step S13, after the setup of the quantum links L, the involved quantum repeaters R can perform entanglement swapping X to establish long-distance quantum entanglement over the best quantum path J thereby enabling transmission of the data Z via the respective quantum channel C. In the absence of link state messages T, swapping X can be performed by placing an internal link between qubits q of two local quantum links within a quantum device 2. Quantum repeaters R that are also configured as quantum network splitters Y can perform swapping X over the recovery path when link state messages T are received from neighbours on the best quantum path J. After sending the data request message W, quantum devices 2 collocated with quantum sources A, can send the first quantum data Z as a respective unit after an initial time interval equal to the transmission waiting time plus a time delta (e.g., estimated based on the time to send another data Z unit after the time interval stipulated in the data request message W. Afterwards, the quantum network Q may return to the idle mode S0 which may constitute a zeroth step.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It will be understood that various changes may be made in the function and arrangement of elements described in an exemplary embodiment without departing from the scope of the claims.

Additionally, it is noted that "comprising" or "including" does not exclude any other elements or steps and "a" or "an" does not exclude a multitude or plurality. It is further noted that features or steps which are described with reference to one of the above exemplary embodiments may also be used in combination with other features or steps of other exemplary embodiments described above. Reference signs in the claims are not to be construed as a limitation.

### List of Reference Signs

- 1: quantum communication arrangement
- 2: quantum device
- 3: control unit
- 4: interface module
- 5: control element
- 6: transmission line
- 7: apparatus
- 8: ground station
- 9: vehicle
- 9a: aircraft
- 9b: satellite
- 10: computer system
- 11: computer / control program
- 12: computer-readable data carrier
- 13: computer-readable medium
- 14: data carrier signal

- q: qubit
- t: time-to-live

- A: source / sender
- B: destination / receiver
- C: quantum communication channel / quantum path
- D: decision
- G: ground
- J: quantum path
- K: quantum bounded channels
- L: quantum link
- M: quantum segment
- N: conventional network
- O: network channel
- P: quantum processor
- Q W: quantum network
- R: quantum repeater
- S: step
- T: link state message
- U: setup message
- V: announcement message data request message
- X: swapping
- Y: quantum network splitter
- Z: transmitted data Z

- I: first phase
- II: second phase
- III: third phase

- D1: unreserved resources?
- D2: unbounded channels?
- D3: waiting time expired?
- D4: link state threshold reached?
- S0: idle mode
- S1: send/receive setup message
- S2: send/receive announcement message
- S3: compute best path
- S4: create bound the channels
- S5: update list of unreserved resources
- S6: compute distance to main paths
- S7: create bounded channels to splitters/repeaters
- S8: send / receive data request message
- S9: trigger timer for creation of quantum link
- S10: forward data request message
- S11: creation of quantum link
- S12: Centrelink data message
- S13: swapping / establish quantum communication channel

## Claims

1. Method for establishing a quantum communication channel (C) to transmit quantum data units (Z) between a source (A) quantum device (2) and a destination (B) quantum device (2) in a quantum computing arrangement (1), the method comprising the steps of
requesting at least one quantum path (J) between a first quantum device (2) and a second quantum device (2);
establishing at least two quantum bounded channels (K) between respective two quantum devices (2) each designated for enabling the at least one quantum path (J);
providing at least two quantum links (L) by entangling at least one qubit (q) of each of the respective two quantum devices (2) connected by the at least two quantum bounded channels (K); and
synchronizing the quantum devices (2) providing the at least two quantum bounded channels (K) in time to provide the at least one quantum path (J) via the at least two quantum links (L) simultaneously for establishing the quantum communication channel (C).

2. Method according to claim 1, further comprising the step of providing a setup message (U) to be received by the quantum devices (2) designated for enabling the quantum path (J).

3. Method according to claim 1 or 2, further comprising the step of establishing at first set of quantum links (L) for providing at least two alternative quantum communication channels (C).

4. Method according to at least one of claims 1 to 3, further comprising the step of assessing at least one at least one quantum path (J) to be best suited for establishing the quantum communication channel (C).

5. Method according to at least one of claims 1 to 4, further comprising the step of triggering a timer for synchronizing the quantum devices (2).

6. Method according to at least one of claims 1 to 5, further comprising the steps of sending a data request message (W) with the source (A) quantum device (2) to the quantum devices (2) providing the at least two quantum bounded channels (K) for providing information regarding resources of the quantum devices (2) required for establishing the quantum communication channel (C).

7. Method according to at least one of claims 1 to 6, further comprising the step of providing at least one link state message (T) indicating a quality of the at least two quantum links (L) represented by a time-to-live value (K) representing an average level of fidelity of the at least two quantum links (L).

8. Method according to at least one of claims 1 to 7, further comprising the step of swapping (X) an entanglement of qubits (q) within at least one quantum device (2) establishing at least two quantum links (L).

9. Control program (11) for controlling a quantum computing arrangement (1), comprising instructions which, when the control program (11) is executed by a control unit (3), cause the control unit (3) to carry out a method of at least one of claims 1 to 8.

10. Computer-readable data carrier (13) having stored thereon the control program according to claim 9.

11. Control unit (3) for controlling at least one quantum device (2) in a quantum computing arrangement (1), configured to carry out a method of at least one of claims 1 to 8 and/or comprising a computer-readable data carrier (13) according to claim 10.

12. Quantum device (2) for a quantum computing arrangement (1), configured to carry out a method of at least one of claims 1 to 8 and/or adapted to be controlled by a control unit (3) according to claim 11.

13. Quantum network (Q) for a quantum computing arrangement (1), configured to carry out a method of at least one of claims 1 to 9 and/or comprising at least one control unit (3) according to claim 11 and/or at least one quantum device (2) according to claim 12.

14. Apparatus (7), such as a satellite (9b), an aircraft (9a) and/or a communication station (8), configured to participate in a quantum computing arrangement (1), comprising at least one control unit (3) according to claim 11, at least one quantum device (2) according to claim 12, and/or at least one quantum network (Q) according to claim 13.

15. Quantum computing arrangement (1) configured to carry out a method according to at least one of claims 1 to 8, comprising at least one control unit (3) according to claim 11, at least one quantum device (2) according to claim 12, at least one quantum network (Q) according to claim 13 and/or at least one apparatus (7) according to claim 14.
